(19) Europäisches Patentamt
European Patent Office
Office européen des brevets

(11) EP 2 099 717 B1

(12) **FASCICULE DE BREVET EUROPEEN**

(45) Date de publication et mention de la délivrance du brevet:
**12.08.2015 Bulletin 2015/33**

(21) Numéro de dépôt: **07847985.4**

(22) Date de dépôt: **07.12.2007**

(51) Int Cl.:
***C02F 3/00*** *(2006.01)*

(86) Numéro de dépôt international:
**PCT/EP2007/063536**

(87) Numéro de publication internationale:
**WO 2008/068335 (12.06.2008 Gazette 2008/24)**

(54) **TRAITEMENT BIOLOGIQUE D 'EAUX PAR AERATION ALTERNATIVEMENT CONTINUE ET SEQUENCEE**

BIOLOGISCHE WASSERBEHANDLUNG DURCH ALTERNIERENDE KONTINUIERLICHE UND SEQUENTIELLE BELÜFTUNG

BIOLOGICAL WATER TREATMENT BY ALTERNATING CONTINUOUS AND SEQUENTIAL AERATION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.12.2006 FR 0610738**

(43) Date de publication de la demande:
**16.09.2009 Bulletin 2009/38**

(73) Titulaire: **Veolia Water Solutions & Technologies Support**
**94410 Saint-Maurice (FR)**

(72) Inventeurs:
- **LEMOINE, Cyrille**
**78500 Sartrouville (FR)**
- **GRELIER, Patricia**
**78500 Sartrouville (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A-93/07088**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 099 717 B1

## Description

La présente invention concerne le domaine du traitement de l'eau. Plus précisément, l'invention se rapporte aux traitements des effluents urbains ou industriels par un procédé d'élimination de la pollution azotée et carbonée grâce à une biomasse en culture libre ou fixée sur un matériau solide.

Une technique classique de dépollution des eaux met en oeuvre un réacteur biologique tel qu'un biofiltre ou une boue activée.

Selon cette technique, le réacteur est aéré pour assurer le traitement de la pollution. Cependant, le niveau de cette aération doit être correctement maîtrisé afin de faire coexister dans le même réacteur deux réactions antagonistes : l'une nécessitant de l'oxygène, la nitrification (N), et l'autre son absence, la dénitrification (DN). En effet, plus l'oxygène disponible dans le réacteur est en excès, plus la dénitrification est inhibée et vice et versa.

Ainsi, le rendement global du procédé de dépollution dépend directement de l'ajustement de l'aération.

Dans les procédés de l'art antérieur, afin d'ajuster l'aération de la biomasse en fonction de la pollution à traiter, on effectue généralement des mesures de paramètres donnés dans le réacteur, ou en sortir de celui-ci. Ils ont pour but de déterminer l'état du système à un instant précis. A partir de cet état, une commande de débit de gaz est calculée puis appliquée. Il s'agit, le plus souvent d'une mesure d'ammonium, de nitrates, de potentiel d'oxydoréduction ou de l'oxygène dissous...D'autres paramètres, que l'on peut nommer « composites » sont aussi utilisés. Il s'agit de combinaisons linéaires des variables mesurées.

Ainsi, dans le cadre de la conduite de procédé en traitement des eaux résiduaires urbaines, l'indicateur de charge polluante (masse de N-NH4 en kilogramme par mètre cube de réacteur aéré et par jour) a déjà été validé comme une donnée utile à la conduite.

En effet, la demande de brevet publiée sous le numéro WO 01/02306 A1 définit un estimateur de cette charge polluante à partir des mesures de conductivité et de turbidité.

Cependant, il s'agit d'une estimation et non d'une mesure directe. Or, dans le cas d'une régulation qui nécessite un degré de précision élevée, il n'est pas possible d'utiliser de tels outils.

Une des justifications de l'utilisation de tels estimateurs tient au coût d'achat et d'entretien des analyseurs spécifiques. On comprend donc que ce faible coût est accompagné de performances très limitées.

Actuellement, on distingue dans l'état de la technique différents types de stratégies de régulation.

Selon l'une de ces stratégies de régulation, on calcule le rendement d'utilisation par la biomasse de l'oxygène distribué « Ct » pour réguler le débit de gaz. Ceci est décrit par le brevet publié sous le numéro FR 2 764 817.

Cette technique nécessite l'emploi d'un Ct de référence qui lui-même dépend de la pollution à traiter. Or, la difficulté réside dans le fait que la charge polluante varie dans le temps et qu'il faut donc changer ce Ct de référence régulièrement afin qu'il soit toujours cohérent, ce qui en exclut l'application dans le cas d'effluent fortement variable.

D'autres techniques utilisent des combinaisons linéaires des variables d'entrée du système (ammonium, nitrates...) pour calculer la commande en débit d'air à appliquer, tel que décrit notamment dans la demande internationale publiée sous le numéro WO 93/07089.

Cependant, ces techniques s'appuient sur une modélisation empirique ou semi-empirique. Les fonctions de commande utilisées sont basées essentiellement sur les données issues de l'expérience des fonctionnements antérieurs. Si le modèle est désadapté du fait de l'évolution de la biomasse ou des performances du filtre, l'aération n'est alors plus optimale.

Des améliorations notables sont obtenues en utilisant des mesures en entrée du système pour estimer la valeur de commande à appliquer. Mais il s'agit toujours d'aération séquencée.

L'art antérieur a également proposé des systèmes de contrôle utilisant une boucle de régulation dite « Feedback/Feedforward » (ce qui peut se traduire par boucle de contre réaction/boucle de prise en tendance).

Selon une approche de ces systèmes, certains auteurs proposent des stratégies visant à piloter la concentration en oxygène dissous dans le réacteur biologique par l'utilisation d'une mesure d'ammonium en entrée.

Selon une autre approche, le concept de charge en ammonium à traiter est utilisé pour prédire l'évolution nécessaire de la consigne en oxygène dissous.

Selon encore d'autres techniques, la régulation du volume aéré s'appuie sur une compartimentation du réacteur (et non pas sur la régulation d'un débit ou d'une vitesse en gaz). Cependant, le caractère foncièrement discret (variation discontinue du volume aéré) de ce type de stratégie, incite les auteurs à toujours compléter leur système par une régulation de l'oxygène dissous.

Un autre mode d'aération existe : il s'agit de l'aération simultanée. Ce mode consiste à faire coexister dans le même réacteur, avec une unité de temps et d'espace, les deux réactions antagonistes de nitrification et dénitrification.

Cependant, le niveau de cette aération doit être correctement maîtrisé afin de maintenir l'équilibre réactionnel.

Ce dernier mode a été décrit dans le document de brevet publié sous le numéro WO-2006/000680 et s'avère plus efficace et plus performant que les modes d'aération décrits précédemment.

Toutefois, lors de pics très importants de charge polluante durant la journée (charge polluante : débit multiplié par la concentration du polluant), l'équilibre métastable obtenu est fragilisé et on observe une diminution des performances de dénitrification et donc une diminution des performances du procédé.

L'invention a notamment pour objectif de pallier les inconvénients de l'art antérieur.

Plus précisément, l'invention a pour objectif de proposer une technique d'aération dans le cadre des procédés de traitement biologique d'eau par biomasse aérée qui soit performante en toutes circonstances, en particulier indépendamment des pics de charge polluante susceptibles d'apparaître.

L'invention a également pour objectif de fournir une telle technique qui puisse être mise en oeuvre aisément, y compris sur des installations existantes.

Ces objectifs, ainsi que d'autres qui apparaîtront par la suite, sont atteints grâce à l'invention qui a pour objet un procédé de traitement d'eaux à l'aide d'un réacteur biologique en vue d'abattre la pollution azotée contenue dans lesdites eaux, ledit réacteur intégrant une biomasse aérée par des moyens d'aération, ledit traitement comprenant des phases de nitrification/dénitrification simultanées, caractérisé en ce que ledit traitement met alternativement en oeuvre deux modes d'aération :

- un mode d'aération dit continu ;
- un mode d'aération séquencé au cours duquel l'arrêt de l'aération est déclenché quand la concentration en ammoniaque atteint un seuil bas prédéterminé et le déclenchement de l'aération est déclenché quand la concentration en ammoniaque atteint un seuil haut prédéterminé,

le passage d'un mode d'aération à l'autre étant déclenché en fonction de la concentration en nitrates dans lesdites eaux, ledit mode d'aération dit continu étant déclenché lorsque ladite concentration en nitrates atteint un seuil bas prédéterminé, et ledit mode d'aération séquencé étant déclenché lorsque ladite concentration en nitrates atteint un seuil haut prédéterminé.

Ainsi, l'invention propose de procéder à un basculement automatique du mode d'aération en fonction des contraintes d'exploitation (traitement de la pollution arrivant sur l'usine), ce qui permet d'optimiser le rendement du procédé d'élimination de la pollution azotée et carbonée.

Le choix automatique du mode d'aération le plus adapté à la charge polluante appliqué sur le réacteur biologique est effectué en fonction de critères de qualité d'eau traitée, en particulier en fonction de la concentration en nitrates.

De plus, l'invention permet de définir des consignes de régulateurs associés à chacun de ces modes, aidant ainsi l'opérateur à optimiser son procédé de traitement.

L'utilisation d'un régulateur de niveau hiérarchique supérieur introduisant la notion de choix dans le mode de régulation et des consignes à appliquer au régulateur inférieur présente une originalité certaine.

En effet, bien que l'homme de l'art connaisse les différents types de régulation possibles de l'aération, il n'existait pas jusqu'à présent d'outils permettant de faire varier continûment les modes d'aération utilisés ainsi que leur consigne.

Au contraire, ces stratégies de contrôle (aération continue et aération séquencée) s'excluaient jusqu'à présent les unes, les autres.

La présente invention propose une solution technique permettant d'appliquer la stratégie la plus adéquate au cours du temps. Celle-ci est déterminée en fonction de la concentration en nitrates résultant du traitement. Elle permet aussi de déterminer la concentration optimum de traitement pour l'ammoniaque en fonction de la formation des nitrates. L'homme de l'art sait qu'il est impossible de fixer simultanément une consigne de traitement sur l'ammoniaque et sur les nitrates formés bien que leur somme représente un indicateur de pollution globale. Il est d'usage que les modes d'aération séquencée ou continue utilisent une consigne d'ammoniaque (NH4) fixé par l'opérateur qui détermine le niveau de traitement de la pollution azotée souhaitée : azote total contenu dans l'eau traitée.

La présente invention détermine par le calcul la consigne d'ammoniaque qui minimise la concentration d'azote total défini comme la somme des nitrates et de l'ammoniaque.

Selon des paramètres préférés, ledit mode d'aération dit continu est déclenché lorsque ladite concentration en nitrates atteint, dans le sens d'une diminution, un seuil d'environ 4 mg/l et ledit mode d'aération séquencé est déclenché lorsque ladite concentration en nitrates atteint, dans le sens d'une augmentation, un seuil d'environ 10 mg/l.

Bien entendu, ces seuils peuvent être modifiés en fonction des besoins.

Avantageusement, l'aération, pendant ledit mode d'aération séquencé, est limité dans le temps par une temporisation.

Egalement avantageusement, l'arrêt de l'aération, pendant ledit mode d'aération séquencé, est limité dans le temps par une temporisation.

Selon une solution préférée, ledit mode d'aération continue met en oeuvre une méthode de contrôle prédictif des concentrations en nitrates et en ammoniaque dans lesdites eaux.

Une telle méthode, avec l'algorithme correspondant a déjà été utilisée dans le cadre d'une boucle cascade NH4/02/Air pour une régulation en NDN simultanée et il a été démontré à cette occasion que ses performances étaient adaptées à ce type de problématique.

Selon une solution avantageuse, ladite méthode de contrôle prédictif comprend des étapes successives de régulation d'une consigne d'ammoniaque à atteindre en fonction d'une consigne en nitrates à atteindre.

Selon une autre caractéristique avantageuse, ladite méthode de contrôle prédictif comprend des étapes successives de régulation d'une consigne d'aération lorsque ladite concentration en nitrates atteint un seuil haut prédéterminé.

Dans ce cas, lesdites étapes de régulation de ladite consigne d'ammoniaque et lesdites étapes de régulation de ladite consigne d'aération sont avantageusement cadencées, et préférentiellement décalées dans le temps les unes par rapport aux autres.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :

- la figure 1 est une illustration sous forme synoptique du basculement d'un mode d'aération à un autre dans un procédé selon l'invention ;
- la figure 2 est une illustration sous forme synoptique du mode d'aération séquencée dans un procédé selon l'invention ;
- la figure 3 est une illustration sous forme synoptique du mode d'aération continue dans un procédé selon l'invention ;
- la figure 4 est une vue schématique d'une unité pilote pour la mise en oeuvre d'un procédé selon l'invention ;
- la figure 5 est un graphique illustrant la régulation nitrification/dénitrification simultanée sur consigne constante en NH4 ;
- la figure 6 est un graphique illustrant la régulation nitrification/dénitrification par cascade de régulateurs NO3 et NH4 ;
- les figures 7 et 8 sont des graphiques illustrant la régulation nitrification/dénitrification par couplage entre aération continue et séquencée selon l'invention ;
- la figure 9 est un graphique illustrant la distribution du nombre de jours ayant une production de boue donnée selon différents procédés.

Le principe de l'invention réside dans le fait de mettre en oeuvre une gestion automatisée du mode d'aération d'un procédé de traitement biologique de traitement d'eau résiduaire urbaine ou industrielle, l'aération étant alternativement continue ou séquencée.

La régulation retenue s'appuie sur les mesures en ligne de nitrates et d'ammoniaque dans le bassin de boue activée. Il s'agit, selon le mode de réalisation qui va être décrit par la suite, de mesures sur l'eau traitée puisque le recours à une filtration membranaire permet de considérer que l'eau traitée est représentative du bassin. En effet, le bassin est alors assimilé à un réacteur parfaitement agité. La variable commandée (manipulée) est le débit d'air dans le pilote.

La stratégie appliquée utilise le principe d'une commande hiérarchisée : la commande principale porte sur le choix du type d'aération, séquencée ou continue. Celles secondaires correspondent aux systèmes de régulation ad hoc pour la réalisation du type d'aération voulue.

Le principe de la gestion 1 des modes d'aération (figure 1) est d'utiliser la mesure 2 de concentration en nitrates comme un indicateur de la charge polluante appliquée sur la station.

Dans l'optique où le régulateur gérant l'aération continue maintient le respect de la consigne en ammoniaque, la concentration en nitrates devient un révélateur des capacités de traitement et permet d'évaluer la capacité du système à travailler en nitrification/dénitrification simultanée.

En effet, tant que l'aération nécessaire au respect de la consigne en ammoniaque n'inhibe pas la dénitrification, la concentration en nitrates reste faible et le procédé met en oeuvre un mode d'aération continue 3.

Inversement, si l'aération doit être forte pour répondre aux exigences précédentes, l'augmentation de l'oxygène dissous dégrade la cinétique de dénitrification et la concentration en nitrates augmente rapidement.

Ainsi, lorsque l'on observe une accumulation de nitrates, il correspond le plus souvent à un pic de charge polluante et il est préférable de passer en mode séquencé car le bassin biologique n'est plus dans des conditions satisfaisantes pour réaliser simultanément la nitrification et la dénitrification.

Bien entendu, si le mode en cours est l'aération séquencée, une mesure de la concentration en nitrates supérieure au seuil correspondant à un pic entraîne le maintien 5 du mode en cours.

Pratiquement, la stratégie consiste à mettre en oeuvre un système de gestion des modes d'aération grâce à des niveaux haut et bas en nitrates (hystérésis) et des temporisations (temps mini et maxi) pour chaque mode. A titre d'exemple, les seuils validés sur le pilote sont :

- seuil bas = 4 mg N-NO3/L ;
- seuil haut = 10 mg N-NO3/L.

Chacun des modes d'aération va maintenant être décrit plus en détail.

Le traitement de l'aération séquencé 4 s'opère de la manière suivante (figure 2) : il s'agit là aussi d'une gestion sur seuil haut 42 et bas 43 mais avec la mesure d'ammoniaque 41 pour le déclenchement 44 et l'arrêt 45 de l'aération (hystérésis) auxquels s'ajoutent des temporisations mini et maxi en cas de défaillances.

Ce mode de fonctionnement peut être appliqué sur des stations uniquement équipé d'aérateur sans variateur pour une NDN classique. La mesure directe de la pollution à travers la mesure d'ammoniaque permet une conduite plus réactive et plus simple du procédé.

La stratégie de régulation en aération continue pour réaliser une nitrification/dénitrification simultanée (NDNs) consiste en l'utilisation d'une cascade de régulateurs dits PFC (Predictive Functional Control). Le détail du régulateur est décrit par la suite.

La figure 3 illustre le fonctionnement de la boucle de contrôle.

Un premier régulateur calcule quelle doit être la consigne d'ammoniaque à atteindre dans une plage comprise entre 1 et 4 mg-N-NH4/L en fonction de la consigne en nitrates 31 à respecter, celle-ci choisie entre 3 et 6 mg-N-N03/L. Il s'agit de maintenir indirectement un équilibre entre les réactions de nitrification et de dénitrification en fonction de la charge polluante appliquée, la mesure des concentrations en ammoniaque 32 et nitrates 33 évoluant alors de manière similaire.

Dans ce cas, l'hypothèse est faite que lorsque la charge s'accroît, les nitrates augmentent, ce qui équivaut à une diminution du rendement de dénitrification (DN) et une augmentation du rendement de nitrification (N), ce qui amène le rendement global (NDNs) à diminuer.

La stratégie est alors d'être moins exigeant sur l'ammonium de l'eau traitée et d'autoriser un résiduel plus élevé. On tente en fait de rétablir l'équilibre des rendements de N et de DN, le contrôleur modifie alors le point de fonctionnement 35 du procédé (diminution de l'air) pour qu'il atteigne un nouvel optimum.

Inversement, lorsque la charge décroît, on peut se permettre d'avoir une qualité d'eau traitée meilleure sans pour autant diminuer le rendement de dénitrification. Il faut noter que les deux régulateurs ne fonctionnent pas à la même cadence, de façon à éviter l'instabilité du système. Le régulateur sur les NO3 modifie la consigne en ammoniaque tous les quarts d'heure, celui du NH4, toutes les minutes.

Cet algorithme décrit par J. Richalet (J. Richalet (1993) « Pratique de la commande prédictive », édition HERMES) a été appliqué dans le cadre d'un système du premier ordre avec gain constant, cependant un gain variable peut-être utilisé suivant les cas. Une des spécificités de cette commande est la notion de trajectoire de référence. Elle spécifie la manière selon laquelle on souhaite que le procédé rejoigne la consigne sur l'horizon de prédiction. Cela revient à fixer plusieurs points de coïncidence simultanément. La plupart du temps, une dynamique du premier ordre est choisie pour le retour à la consigne.

Dans le cas de l'invention, on souhaite que l'écart suive une décroissance exponentielle avec une constante de temps fixée par l'opérateur.

Une autre caractéristique importante est l'évolution libre du modèle : il est indépendant de l'évolution du processus, ce qui permet d'exploiter le caractère récursif des fonctions de transfert et donc de limiter les calculs. L'expression de la commande est décrite ci-après.

Equation 1 : commande PFC

$$S_m(n) = S_m(n-1)\cdot e^{-\frac{T_e}{\tau}} + G_s \cdot \left(1 - e^{-\frac{T_e}{\tau}}\right) \cdot u(n-1)$$

$$u(n) = \frac{1}{G_s}\left(k_0\left(S_p(n) - C(n)\right) + S_m(n)\right)$$

La mise en place de ce régulateur est aisée car hormis l'identification du modèle, il n'existe qu'un paramètre de réglage $k_0$ défini comme le rapport du TRBO **(Temps de Réponse en Boucle Ouverte, ie sans régulation)** sur TRBF **(Temps de Réponse en Boucle Fermée, ie régulation enclenchée).** Le $\boldsymbol{k_0}$ optimum est en général de 3.

Une autre expression de la commande existe dans le cas où le système à piloter possèderait un retard pur $\theta = r.Te$.

Equation 2 : commande PFC avec retard pur

$$u(n)=\frac{1}{G_s}\left(k_0\left(S_p(n)-C(n)+S_m(n-r)-S_m(n)\right)+S_m(n-r)\right)$$

L'algorithme PFC est plus simple dans son application que le PID **(régulateur Proportionnel Intégral Dérivé)** mais beaucoup plus efficace. Cet algorithme a déjà été utilisé dans le cadre d'une boucle cascade NH4/O2/Air pour une régulation en NDN simultanée (document de brevet publié sous le numéro WO-2006/000680), et il a été démontré à cette occasion que ses performances étaient adaptées à ce type de problématique.

Le principe général de l'invention peut être résumé de la façon suivante.

La dégradation de la pollution azotée met en oeuvre deux réactions : la nitrification et la dénitrification. La nitrification est une réaction aérobie qui conduit à transformer le $NH_4$ en $NO_3$. La dénitrification est une réaction anoxique qui conduit à dégrader le $NO_3$ en $N_2$ gazeux.

L'invention consiste à améliorer le traitement de la pollution azotée en alternant un mode d'aération continu au cours duquel ces deux réactions se produisent simultanément (au cours d'une même période et dans le même espace), et un mode d'aération séquencé alternant des phases de non aération et des phases d'aération et au cours duquel ces réactions se produisent alternativement. Le passage en mode séquencé se fait lorsque la concentration en $NO_3$ de l'effluent traité atteint un seuil haut prédéterminé. En mode séquencé, l'aération est stoppée lorsque la concentration en $NH_4$ de l'effluent traité atteint un seuil bas prédéterminé et l'aération est activée lorsque la concentration en $NH_4$ de l'effluent traité atteint un seuil haut prédéterminé.

Tant que l'aération nécessaire à la nitrification, c'est-à-dire à la dégradation du $NH_4$ en $NO_3$, n'inhibe pas la dénitrification, la concentration en $NO_3$ n'excède pas le seuil haut prédéterminé. Le système est apte à fonctionner en NDNs (Nitrification Dénitrification simultanées). Le mode d'aération continu est alors maintenu.

Une hausse du $NO_3$ traduit une baisse du rendement de dénitrification au profit d'une hausse du rendement de nitrification. Lorsque la concentration en $NO_3$ dépasse ce seuil haut prédéterminé, le système n'est plus apte à faire coexister simultanément les deux réactions, c'est-à-dire à fonctionner en NDNs. Pour rétablir un équilibre entre ces deux réactions, il est alors nécessaire d'enclencher le mode séquencé afin d'alterner des phases de dénitrification et des phases de nitrification. Le système fonctionne alors en NDNc (Nitrification Dénitrification classique).

A l'enclenchement du mode séquencé, l'aération est stoppée de façon à favoriser l'élimination de l'excès de $NO_3$ par dénitrification. Ceci conduit progressivement à observer une augmentation du $NH_4$ du fait que la nitrification est inhibée. Lorsque la concentration en $NH_4$ atteint le seuil haut prédéterminé, l'aération est activée de façon à favoriser sa dégradation par nitrification. Quand la concentration en $NH_4$ est faible, ce qui traduit que la concentration en $NO_3$ a augmenté, l'aération est de nouveau stoppée afin de favoriser la dénitrification.

Le mode séquencé alternant des phases de dénitrification et de nitrification est maintenu jusqu'à ce que la concentration en $NO_3$ atteigne le seuil bas prédéterminé. À la fin d'une phase de nitrification, lorsque l'on atteint le seuil bas en $NH_4$, si la concentration en $NO_3$ mesurée est inférieure au seuil bas prédéterminée, ceci traduit le fait que le système est de nouveau apte à fonctionner en NDNs. Le mode continu est alors enclenché.

Le système passe ainsi d'un mode d'aération à l'autre dès que les conditions requises à cet effet sont remplies.

L'invention permet en outre d'optimiser la NDNs par la mise en oeuvre d'une méthode prédictive dont le principe est résumé ci-après.

La charge d'une eau brute, c'est-à-dire sa concentration en polluants, varie au cours du temps. Par exemple, il a été observé que la charge d'une eau usée urbaine croît au cours de la matinée puis baisse au cours de l'après-midi jusqu'à atteindre un niveau sensiblement stable à partir de la soirée.

La transition entre la hausse et la baisse de la charge polluante se traduit pas l'apparition d'un pic de pollution qui correspond le plus souvent à une accumulation de $NO_3$.

En mode aération continue, une hausse de la concentration en $NO_3$ révèle l'inaptitude du système à fonctionner en NDNs. Toutefois, tant que la concentration en $NO_3$ reste inférieure au seuil haut au-delà duquel le mode d'aération séquencé est activé, le système continue de fonctionner en NDNs. Cependant, la concentration relativement élevée de $NO_3$ indique que le rendement de la nitrification est supérieur au rendement de la dénitrification. En d'autres termes, l'équilibre entre les deux réactions n'est pas optimal.

Afin de pallier ce problème, il convient, au cours des pics de pollution, de rééquilibrer ces deux réactions en favorisant la dénitrification tout en maintenant la nitrification, mais à un rendement plus faible.

L'invention propose en ce sens une solution qui concoure à optimiser la NDNs. Cette solution consiste en la mise en oeuvre d'une méthode prédictive.

Cette méthode prédictive consiste à investir l'opérateur en charge de la mise en oeuvre du procédé de traitement d'une faculté de faire évoluer la valeur de consignes de concentrations en $NO_3$ et $NH_4$ à atteindre au cours de la journée.

Ainsi, selon les heures de la journée, c'est-à-dire en fonction de la charge polluante estimée de l'eau à traiter, l'opérateur peut choisir la consigne de $NO_3$ à respecter dans une gamme de concentration. Un premier régulateur PFC calcule, en fonction de la consigne de l'opérateur, une consigne de $NH_4$ à atteindre. Un deuxième régulateur PFC détermine une consigne d'aération en fonction de la consigne de concentration en $NH_4$ calculée.

Ainsi, lorsque la charge polluante augmente aux heures de pointes, et que la concentration en $NO_3$ augmente, l'opérateur peut choisir une consigne de concentration en $NO_3$ plus importante qu'en période creuse. Consécutivement, une consigne de concentration en $NH_4$ à atteindre est calculée. La valeur de cette consigne est plus importante en période de pointe. En d'autres termes, il est toléré, en période de pointe, que la concentration en $NH_4$ soit momentanément plus importante. Le fait d'autoriser une concentration plus importante de $NH_4$ conduit à réduire le rendement de la nitrification, et donc à limiter la formation de $NO_3$ issue de la dégradation du $NH_4$. Ce résultat est atteint en réduisant l'aération. Le fait de réduire l'aération conduit corollairement à augmenter le rendement de la dénitrification et ainsi à favoriser la dégradation du $NO_3$.

Un équilibre est alors maintenu entre ces deux réactions qui se produisent simultanément de façon à réduire la concentration en $NO_3$ consécutivement à un pic de pollution. L'eau ainsi produite présente une qualité optimale compte tenu des circonstances. En effet, la somme des concentrations en $NO_3$ et $NH_4$ qui représente la pollution azotée à éliminer est plus faible.

Lorsque la charge polluante décroît, la concentration en $NH_4$ de l'eau brute diminue et la concentration en $NO_3$ est très faible. Il devient alors possible de viser des concentrations en $NO_3$ et en $NH_4$ plus basses. L'opérateur peut alors choisir de faire baisser la consigne de concentration en $NO_3$. La consigne en $NH_4$ calculée en conséquence est abaissée et la consigne d'aération augmente. Le rendement de la nitrification augmente en conséquence. Toutefois, compte tenu du fait que la concentration en $NO_3$ est faible (période creuse), le rendement de la dénitrification n'est pas pour autant réduit. L'eau produite en dehors des pics de pollution présente ainsi une meilleure qualité.

La mise en oeuvre de cette méthode prédictive permet ainsi de tirer au mieux profit des capacités du procédé à fonctionner en NDNs selon les circonstances de sa mise en oeuvre, et en particulier selon les variations de la charge polluante de l'eau à traiter. Bien sûr, si la charge polluante croît dans des proportions telles que le seuil haut prédéterminé de $NO_3$ est atteint, le système ne peut pas fonctionner en NDNs et le mode séquencé est enclenché de façon à ce que le système fonctionne en NDNc.

L'unité pilote ayant été utilisée pour réaliser des tests du procédé selon l'invention est décrite ci-après.

Les bioréacteurs à membranes combinent les techniques séparatives à membrane et les réacteurs biologiques. La principale modification par rapport à une filière de boue activée classique est le remplacement du clarificateur par l'unité de filtration membranaire 6 qui assure la séparation de la liqueur mixte et de l'eau traitée.

Le bioréacteur à membrane est basé sur une technologie hybride : le module de filtration est immergé dans un compartiment placé sur une boucle de recirculation en dehors du réacteur biologique.

Le pilote est directement alimenté par une eau résiduaire urbaine. Elle est d'abord dégrillée à 1mm sur un tamis rotatif puis pompée vers le bioréacteur. L'alimentation de l'eau brute est séquencée en fonction du niveau dans la colonne.

Le volume du réacteur biologique 7 est d'environ 1,7 $m^3$, muni d'un agitateur 71 afin d'homogénéiser les boues activées. L'aération du bassin est assurée par un diffuseur d'air 72 de type fines bulles. La régulation de l'air est l'objet de la présente invention.

Afin de suivre la concentration en oxygène dissout dans le réacteur biologique, une sonde à oxygène 73 est immergée dans le bassin à boues activées.

Les purges de boues sont réalisées automatiquement sur ouverture de la vanne de purge 74 située sur la boucle de recirculation 741 à l'entrée du compartiment membrane 6.

L'âge des boues a varié pendant la durée des essais. Il a été d'environ 16 jours pendant toute la période de référence. Pour la phase de NDN simultanée, il est passé de 16 à 22 puis à 30 jours au cours de la période. La raison principale de ces modification est le maintien d'un niveau correct de matière en suspension (MES) dans le bassin lié à une diminution de la production de boue comme cela va être indiqué dans la partie résultats.

Une injection du chlorure ferrique 75 lors de la déphosphatation physico-chimique se fait directement dans le réacteur. Le débit de la pompe d'injection 76 est asservi au débit de soutirage 77 afin d'obtenir un taux de traitement constant.

Le module membranaire 6, immergé dans un compartiment membrane, est composé d'un ensemble de fibres creuses de microfiltration fabriqué par Memcor (Australie - marque déposée). La filtration 61 de la liqueur mixte, est effectuée par aspiration, par le haut du module à un débit de soutirage régulé par l'automate. Le perméat est stocké dans une cuve servant pour les rétrolavages avant d'être rejeté à l'égout. Les cycles de filtration et de rétrolavage (injection de perméat à contre-courant) sont respectivement de 12 minutes et 30 secondes. Un système d'aération grosses bulles 62 permet d'agiter les fibres membranaires et de limiter la formation d'un gâteau à leur surface.

Chaque semaine, un nettoyage de maintenance au chlore est réalisé en injectant une solution à 300 ppm à contre-courant.

Lorsque la perméabilité de la membrane atteint un seuil bas d'environ 80 $L.h^{-1}.m^{-2}.bar^{-1}$, des nettoyages chimiques à l'acide citrique sont effectués.

Les membranes se présentent sous forme de fibres creuses à peau externe (filtration de l'extérieur vers l'intérieur) assemblées dans un module représentant une surface de filtration de 10 $m^2$. Leur seuil de coupure est d'environ 0.1 $\mu$m.

**Résultats**

Régulation nitrification/dénitrification simultanée seule sur consigne constante en NH4.

Les essais réalisés pour réguler la concentration en ammoniaque par un contrôleur PFC (figure 5) ont démontré que le pouvoir de commande du débit d'air était satisfaisant et qu'il était donc possible d'obtenir un suivi de consigne acceptable grâce au contrôle de la quantité d'air injecté.

En outre, on observe qu'un système feedback seul peut convenir à ce procédé pour anticiper les variations de l'effluent. En effet, dans notre exemple, le débit ne varie pas au cours de la journée.

On peut noter, un effet de pompage pendant la pointe qui pourrait être gênant si le débit d'alimentation était éminemment variable, ce point serait réglé par l'utilisation de la commande décrite dans le document de brevet publié sous le numéro WO-2006/000680.

On observe aussi que la concentration en oxygène dissous est quasi nulle pendant le traitement, avec un maximum de 0,3 mg-O2/L. L'absence d'oxygène résiduel, malgré quelques pics ponctuels est un bon indicateur de l'efficacité du processus de contrôle de la NDN simultanée.

Cependant, les concentrations en nitrates demeurent élevées pendant les pointes de charge polluante. Il est donc nécessaire d'adapter les consignes en ammoniaque de façon à ne pas inhiber la cinétique de dénitrification par un excès d'oxygénation même faible.

Adaptation de la consigne d'ammoniaque au cours du temps (boucle cascade NO3/NH4).

La régulation cascade permet d'adapter en continu les objectifs de traitement de l'ammoniaque. La figure 6 présente les effets de la régulation en cascade des concentrations en NO3 et NH4. Une diminution des valeurs de pointe en nitrates est observée en comparaison avec la figure 5, dans des conditions similaires de traitement.

Dans cet essai, le seuil maximum fixé sur la teneur en nitrates dans l'eau traitée était de 6 mg-N-NO3/L.

Les effets du régulateur s'évaluent grâce aux variations des concentrations en ammoniaque en vue de l'adaptation des consignes aux conditions de traitement.

En effet, les consignes en NH4 (bornées entre 2 et 6 mg-N-NH4/L) évoluent au cours de la journée pour s'adapter aux possibilités de dénitrification. Ainsi, pendant la période de pointe (matinée), la concentration en NH4 de l'eau traitée atteint 6 mg-N-NH4/L.

A contrario, pendant les heures creuses, elle approche 2 mg-N-NH4/L avec le maintien d'une concentration en nitrates inférieure à 6 mg-N-NO3/L. Cet exemple montre bien la complémentarité des deux mesures nitrates et ammoniaque pour optimiser la NDN simultanée.

Apports du changement automatique de mode d'aération

Malgré les adaptations des consignes de traitement en continu par la régulation cascade (N03, NH4), ces améliorations peuvent être parfois insuffisantes pour certaines conditions de traitement : en particulier pour les fortes charges ponctuelles quelles soient massiques ou volumiques.

Les figures 7 et 8 illustrent les effets d'un couplage entre aération séquencée et continue. Le régulateur objet de l'invention, permet de passer d'un mode à l'autre en fonction de seuils haut et bas en nitrates.

On ménage ainsi des périodes de non aération favorisant la dénitrification quand les charges appliquées ne permettent pas de réaliser une NDN simultanée de manière satisfaisante.

Les résultats montrent que cela peut être le cas deux à trois heures par jour. Le bénéfice vient de la diminution substantielle de la concentration moyenne en nitrates dans l'eau traitée. L'observation de la figure 8 confirme une réduction de l'amplitude des pics de nitrate pendant la période de pointe sans nuire à la valeur de l'ammoniaque.

Ce système apporte donc une robustesse supplémentaire à la conduite des bassins de boues activées et autres procédés de traitement biologique, en permettant un repli automatique vers une aération classique grâce à un indicateur pertinent.

Par ailleurs, un effet supplémentaire important du passage dans le mode de régulation objet de l'invention a été la réduction de la production de boue. La figure 9 affiche la distribution des productions de boue (Nb semaine/Quantité de boue produite) pour chaque configuration. On observe que le passage en NDN simultanée déplace le barycentre de la distribution de 0,40 kg MES/kg DCO à 0,35 kg MES/kg DCO.

Les valeurs obtenues correspondent à une diminution de 13% de la quantité de boue produite. De plus, si l'on considère invariante la fraction minérale liée au traitement physico-chimique du phosphore qui est de l'ordre de 0,1 kg MES/kg DCO, on obtient alors une réduction de la production de boue biologique de 17%. C'est ce constat qui a permis d'augmenter l'âge des boues dans le bassin sans être limité par les performances de la filtration membranaire. La diminution de la production est un avantage important dérivant de l'application de ladite loi de régulation.

## Revendications

**1.** Procédé de traitement d'eaux à l'aide d'un réacteur biologique en vue d'abattre la pollution azotée contenue dans lesdites eaux, ledit réacteur intégrant une biomasse aérée par des moyens d'aération, ledit traitement comprenant des phases de nitrification/dénitrification simultanées,
**caractérisé en ce que** ledit traitement met alternativement en oeuvre deux modes d'aération :

- un mode d'aération dit continu ;
- un mode d'aération séquencé au cours duquel l'arrêt de l'aération est déclenché quand la concentration en ammoniaque atteint un seuil bas prédéterminé et le déclenchement de l'aération est déclenché quand la concentration en ammoniaque atteint un seuil haut prédéterminé,

le passage d'un mode d'aération à l'autre étant déclenché en fonction de la concentration en nitrates dans lesdites eaux, ledit mode d'aération dit continu étant déclenché lorsque ladite concentration en nitrates atteint un seuil bas prédéterminé, et ledit mode d'aération séquencé étant déclenché lorsque ladite concentration en nitrates atteint un seuil haut prédéterminé.

**2.** Procédé de traitement d'eaux selon la revendication 1, **caractérisé en ce que** ledit mode d'aération dit continu est déclenché lorsque ladite concentration en nitrates atteint, dans le sens d'une diminution, un seuil d'environ 4 mg/l.

**3.** Procédé de traitement d'eaux selon l'une des revendications 1 et 2, **caractérisé en ce que** ledit mode d'aération séquencé est déclenché lorsque ladite concentration en nitrates atteint, dans le sens d'une augmentation, un seuil d'environ 10 mg/l.

**4.** Procédé de traitement d'eaux selon l'une quelconque des revendications 1 à 3, **caractérisé en ce que** l'aération, pendant ledit mode d'aération séquencé, est limité dans le temps par une temporisation.

**5.** Procédé de traitement d'eaux, selon l'une quelconque des revendications 1 à 4, **caractérisé en ce que** l'arrêt de l'aération, pendant ledit mode d'aération séquencé, est limité dans le temps par une temporisation.

**6.** Procédé de traitement d'eaux selon l'une quelconque des revendications 1 à 5, **caractérisé en ce que** ledit mode d'aération continue met en oeuvre une méthode de contrôle prédictif des concentrations en nitrates et en ammoniaque dans lesdites eaux.

**7.** Procédé de traitement d'eaux selon la revendication 6, **caractérisé en ce que** ladite méthode de contrôle prédictif comprend des étapes successives de régulation d'une consigne d'ammoniaque à atteindre en fonction d'une consigne en nitrates à atteindre.

**8.** Procédé de traitement d'eaux selon l'une quelconque des revendications 6 et 7, **caractérisé en ce que** ladite méthode de contrôle prédictif comprend des étapes successives de régulation d'une consigne d'aération lorsque ladite concentration en nitrates atteint un seuil haut prédéterminé.

**9.** Procédé de traitement d'eaux selon les revendications 7 et 8, **caractérisé en ce que** lesdites étapes de régulation de ladite consigne d'ammoniaque et lesdites étapes de régulation de ladite consigne d'aération sont cadencées.

**10.** Procédé de traitement d'eaux selon la revendication 9, **caractérisé en ce que** lesdites étapes de régulation de ladite consigne d'ammoniaque et lesdites étapes de régulation de ladite consigne d'aération sont cadencées et décalées dans le temps les unes par rapport aux autres.

## Patentansprüche

1. Verfahren zur Behandlung von Wasser mit Hilfe eines biologischen Reaktors in Hinsicht auf das Absenken der im Wasser enthaltenen Verunreinigung mit Stickstoff, wobei der Reaktor eine mit Belüftungsvorrichtungen belüftete Biomasse umfasst, wobei die Behandlung gleichzeitige Nitrifizierungs-/Denitrifizierungsphasen umfasst, **dadurch gekennzeichnet, dass** die Behandlung alternativ zwei Belüftungsmodi einsetzt:

   - einen kontinuierlichen Belüftungsmodus;
   - einen sequentiellen Belüftungsmodus, in dessen Verlauf der Stillstand der Belüftung ausgelöst wird, wenn die Ammoniakkonzentration eine vorherbestimmte untere Grenze erreicht und das Starten der Belüftung ausgelöst wird, wenn die Ammoniakkonzentration eine vorherbestimmte obere Grenze erreicht,

   wobei der Übergang von einem Belüftungsmodus zum anderen in Abhängigkeit von der Nitratkonzentration im Wasser ausgelöst wird, wobei der kontinuierliche Belüftungsmodus ausgelöst wird, wenn die Nitratkonzentration eine vorherbestimmte untere Grenze erreicht und der sequenzielle Belüftungsmodus ausgelöst wird, wenn die Nitratkonzentration eine vorherbestimmte obere Grenze erreicht.

2. Verfahren zur Behandlung von Wasser nach Anspruch 1, **dadurch gekennzeichnet, dass** der kontinuierliche Belüftungsmodus ausgelöst wird, wenn die Nitratkonzentration, im Sinne einer Verringerung, eine Grenze von ungefähr 4 mg/l erreicht.

3. Verfahren zur Behandlung von Wasser nach einem der Ansprüche 1 und 2, **dadurch gekennzeichnet, dass** der sequentielle Belüftungsmodus ausgelöst wird, wenn die Nitratkonzentration, im Sinne einer Erhöhung, eine Grenze von ungefähr 10 mg/l erreicht.

4. Verfahren zur Behandlung von Wasser nach einem der Ansprüche 1 bis 3, **dadurch gekennzeichnet, dass** die Belüftung während des sequentiellen Belüftungsmodus durch eine Verzögerung zeitlich begrenzt wird.

5. Verfahren zur Behandlung von Wasser nach einem der Ansprüche 1 bis 4, **dadurch gekennzeichnet, dass** der Stillstand der Belüftung während des sequentiellen Belüftungsmodus durch eine Verzögerung zeitlich begrenzt wird.

6. Verfahren zur Behandlung von Wasser nach einem der Ansprüche 1 bis 5, **dadurch gekennzeichnet, dass** der kontinuierliche Belüftungsmodus ein prädiktives Kontrollverfahren der Nitrat- und Ammoniakkonzentrationen im Wasser einsetzt.

7. Verfahren zur Behandlung von Wasser nach Anspruch 6, **dadurch gekennzeichnet, dass** das prädiktive Kontrollverfahren aufeinanderfolgende Schritte der Regulation eines zu erreichenden Sollwerts von Ammoniak in Abhängigkeit von einem zu erreichenden Sollwert von Nitraten umfasst.

8. Verfahren zur Behandlung von Wasser nach einem der Ansprüche 6 und 7, **dadurch gekennzeichnet, dass** das prädiktive Kontrollverfahren aufeinanderfolgende Schritte der Regulation eines Belüftungssollwerts umfasst, wenn die Nitratkonzentration eine vorherbestimmte obere Grenze erreicht.

9. Verfahren zur Behandlung von Wasser nach einem der Ansprüche 7 und 8, **dadurch gekennzeichnet, dass** die Schritte der Regulation des Sollwerts von Ammoniak und die Schritte der Regulation des Belüftungssollwerts getaktet sind.

10. Verfahren zur Behandlung von Wasser nach Anspruch 9, **dadurch gekennzeichnet, dass** die Schritte der Regulation des Sollwerts von Ammoniak und die Schritte der Regulation des Belüftungssollwerts getaktet sind und die einen in Bezug auf die anderen zeitlich versetzt sind.

## Claims

1. Process for treating water using a biological reactor in order to diminish the nitrogen pollution contained in said water, in which said reactor integrates an aerated biomass by aeration means, and said treatment includes simultaneous nitrification/denitrification phases, **characterized in that** said treatment alternately implements two aeration modes:

- a so-called continuous aeration mode;
- a sequential aeration mode in which the aeration is stopped when the ammoniac concentration reaches a predetermined low threshold and the aeration is activated when the ammoniac concentration reaches a predetermined high threshold,

in which the switch from one aeration mode to the other is activated according to the nitrate concentration in said water, said so-called continuous aeration mode being activated when said nitrate concentration reaches a predetermined low threshold, and said sequential aeration mode being activated when said nitrate concentration reaches a predetermined high threshold.

**2.** Water treatment process according to claim 1, **characterized in that** said so-called continuous aeration mode is activated when said nitrate concentration decreases to a threshold of around 4 mg/l.

**3.** Water treatment process according to one of claims 1 or 2, **characterized in that** said sequential aeration mode is activated when said nitrate concentration increases to a threshold of around 10 mg/l.

**4.** Water treatment process according to any one of claims 1 to 3, **characterized in that** the aeration, during said sequential aeration mode, is limited over time by a time delay.

**5.** Water treatment process according to any one of claims 1 to 4, **characterized in that** the stopping of the aeration, during said sequential aeration mode, is limited over time by a time delay.

**6.** Water treatment process according to any one of claims 1 to 5, **characterized in that** said continuous aeration mode involves a method of predictive control of the nitrate and ammoniac concentrations in said water.

**7.** Water treatment process according to claim 6, **characterized in that** said predictive control method includes successive steps of regulating an ammoniac set point to be reached according to a nitrate set point to be reached.

**8.** Water treatment process according to either one of claims 6 or 7, **characterized in that** said predictive control method also includes successive steps of regulating an aeration set point when said nitrate concentration reaches a predetermined high threshold.

**9.** Water treatment process according to either one of claims 7 and 8, **characterized in that** said steps of regulating said ammoniac set point and said steps of regulating said aeration set point are timed.

**10.** Water treatment process according to claim 9, **characterized in that** said steps of regulating said ammoniac set point and said steps of regulating said aeration set point are timed and staggered in time with respect to one another.

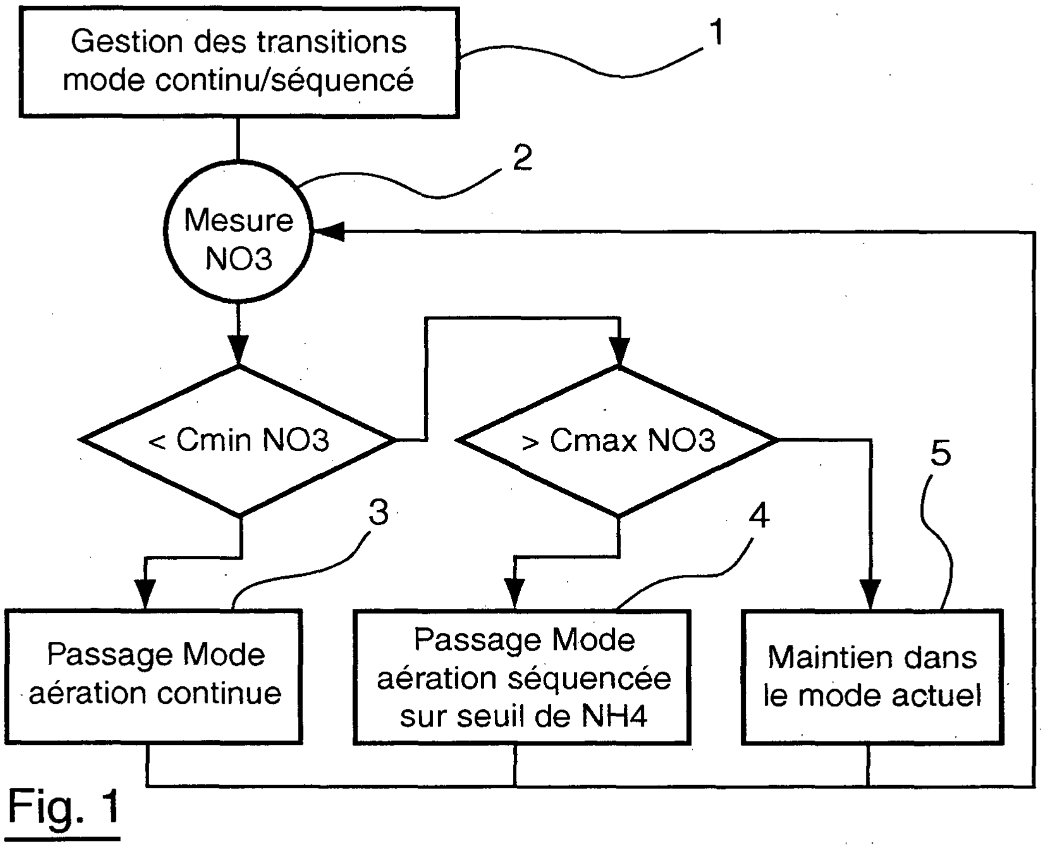
Gestion des transitions mode continu/séquencé
1
Mesure NO3
2
< Cmin NO3
> Cmax NO3
3
4
5
Passage Mode aération continue
Passage Mode aération séquencée sur seuil de NH4
Maintien dans le mode actuel

Fig. 1

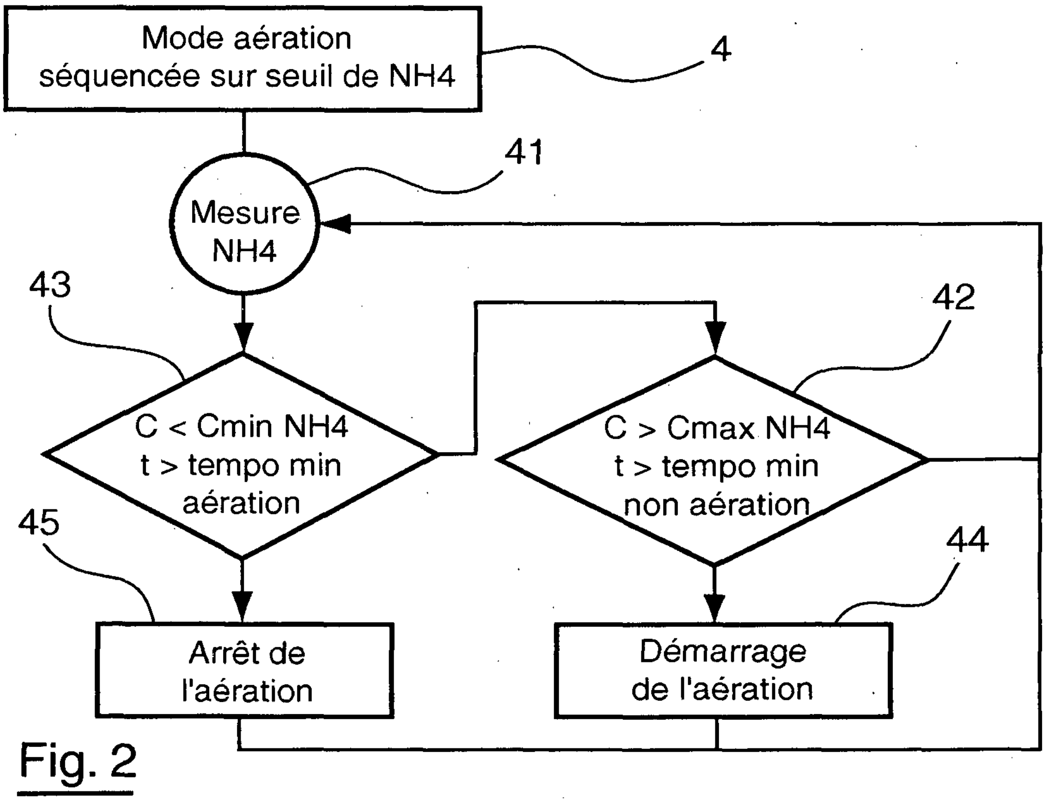
Mode aération séquencée sur seuil de NH4
4
Mesure NH4
41
43
42
C < Cmin NH4 t > tempo min aération
C > Cmax NH4 t > tempo min non aération
45
44
Arrêt de l'aération
Démarrage de l'aération

Fig. 2

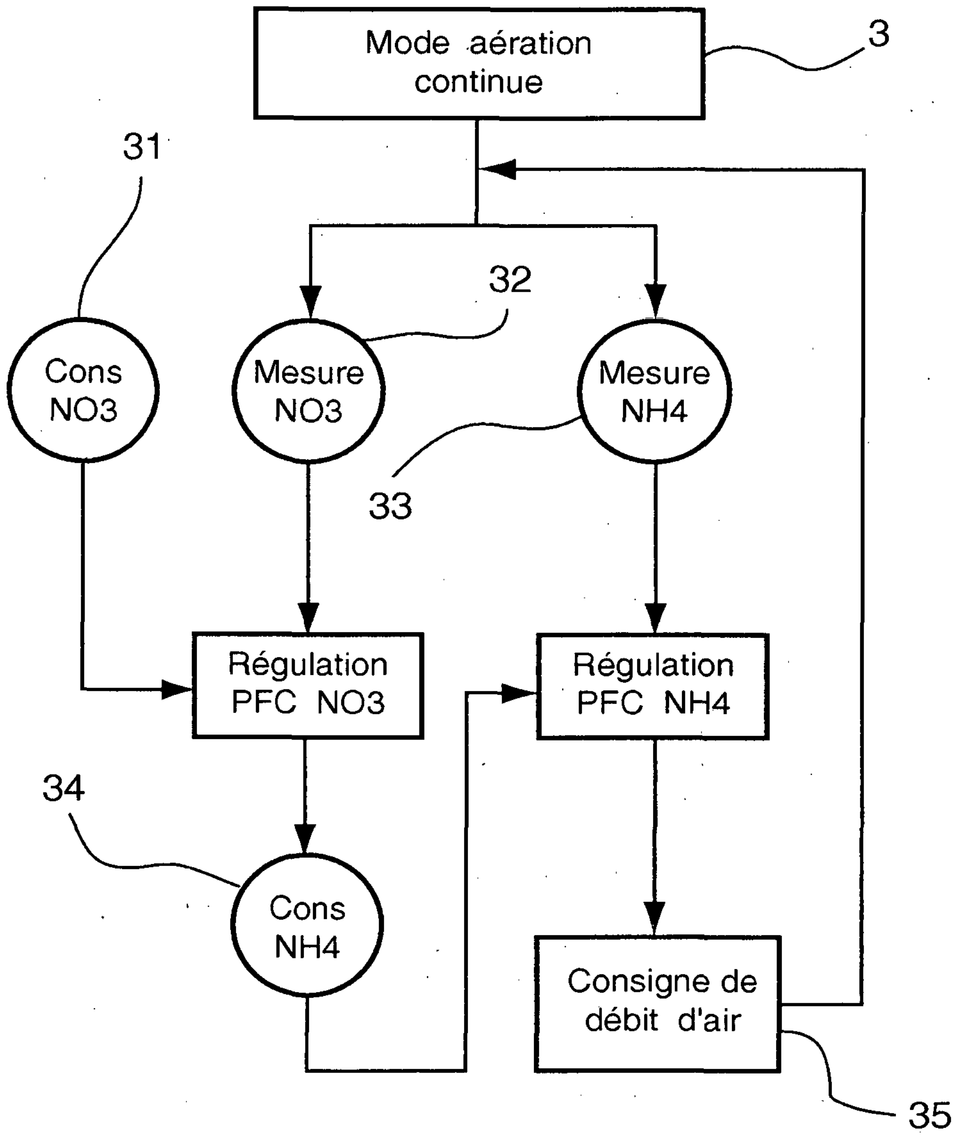
Mode aération continue
3
31
32
Cons NO3
Mesure NO3
Mesure NH4
33
Régulation PFC NO3
Régulation PFC NH4
34
Cons NH4
Consigne de débit d'air
35

Fig. 3

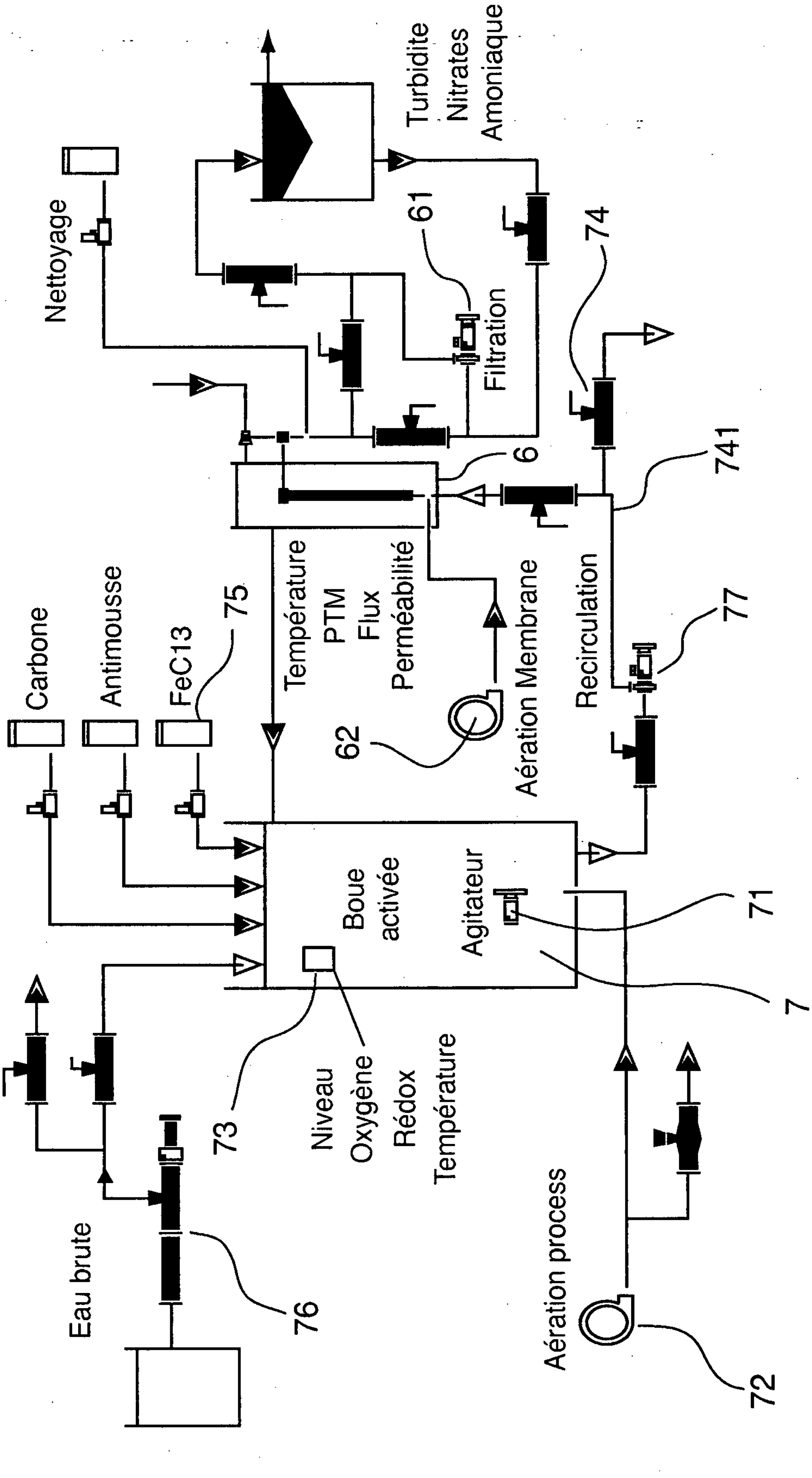
Nettoyage
Turbidite
Nitrates
Amoniaque
61
Filtration
74
6
741
Carbone
Antimousse
FeC13
75
Température
PTM
Flux
Perméabilité
Aération Membrane
62
Recirculation
77
Boue
activée
Agitateur
71
7
73
Niveau
Oxygène
Rédox
Température
Eau brute
76
Aération process
72

Fig. 4

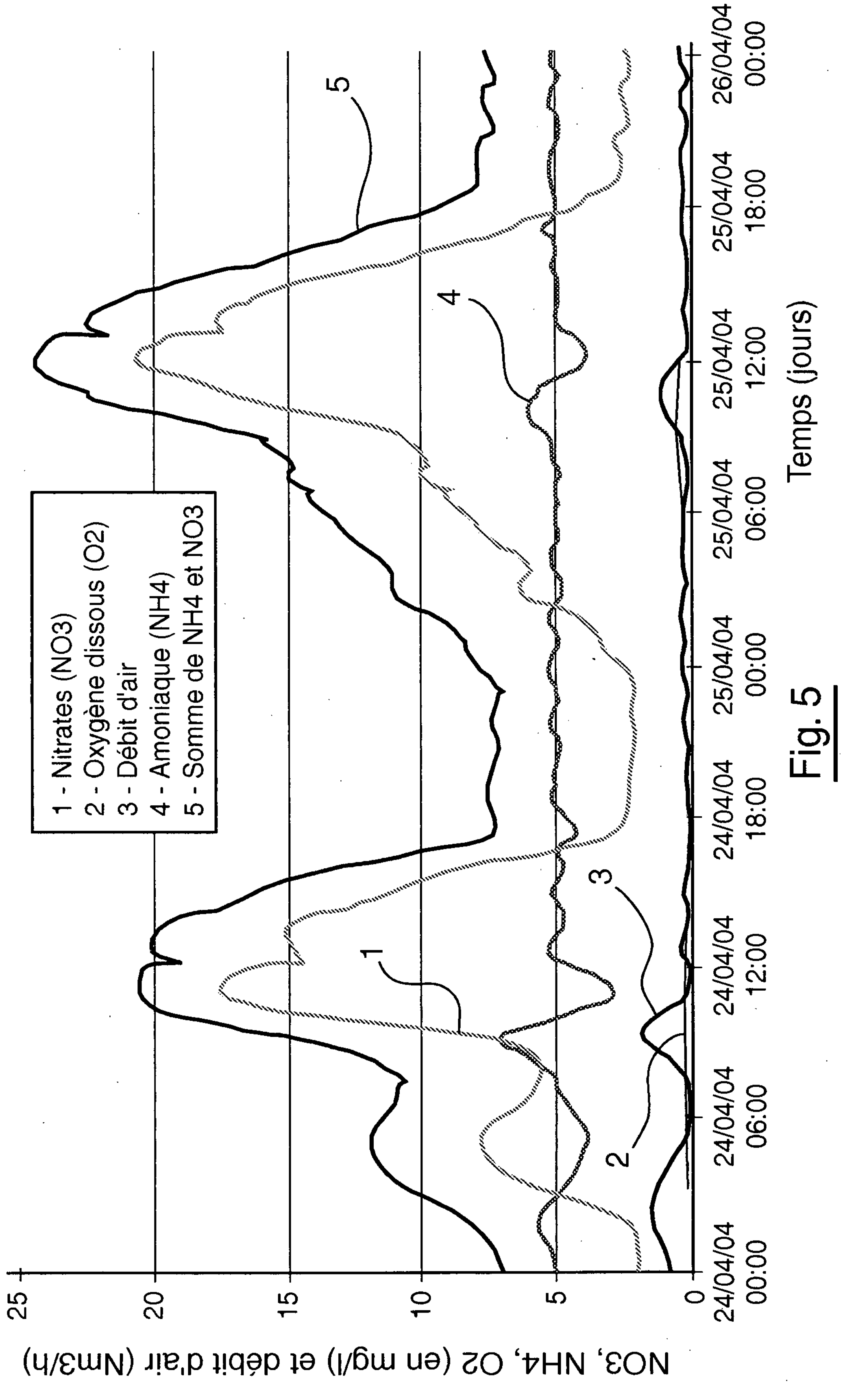
1 - Nitrates (NO3)
2 - Oxygène dissous (O2)
3 - Débit d'air
4 - Amoniaque (NH4)
5 - Somme de NH4 et NO3
NO3, NH4, O2 (en mg/l) et débit d'air (Nm3/h)
0
5
10
15
20
25
24/04/04 00:00
24/04/04 06:00
24/04/04 12:00
24/04/04 18:00
25/04/04 00:00
25/04/04 06:00
25/04/04 12:00
25/04/04 18:00
26/04/04 00:00
Temps (jours)
1
2
3
4
5

Fig. 5

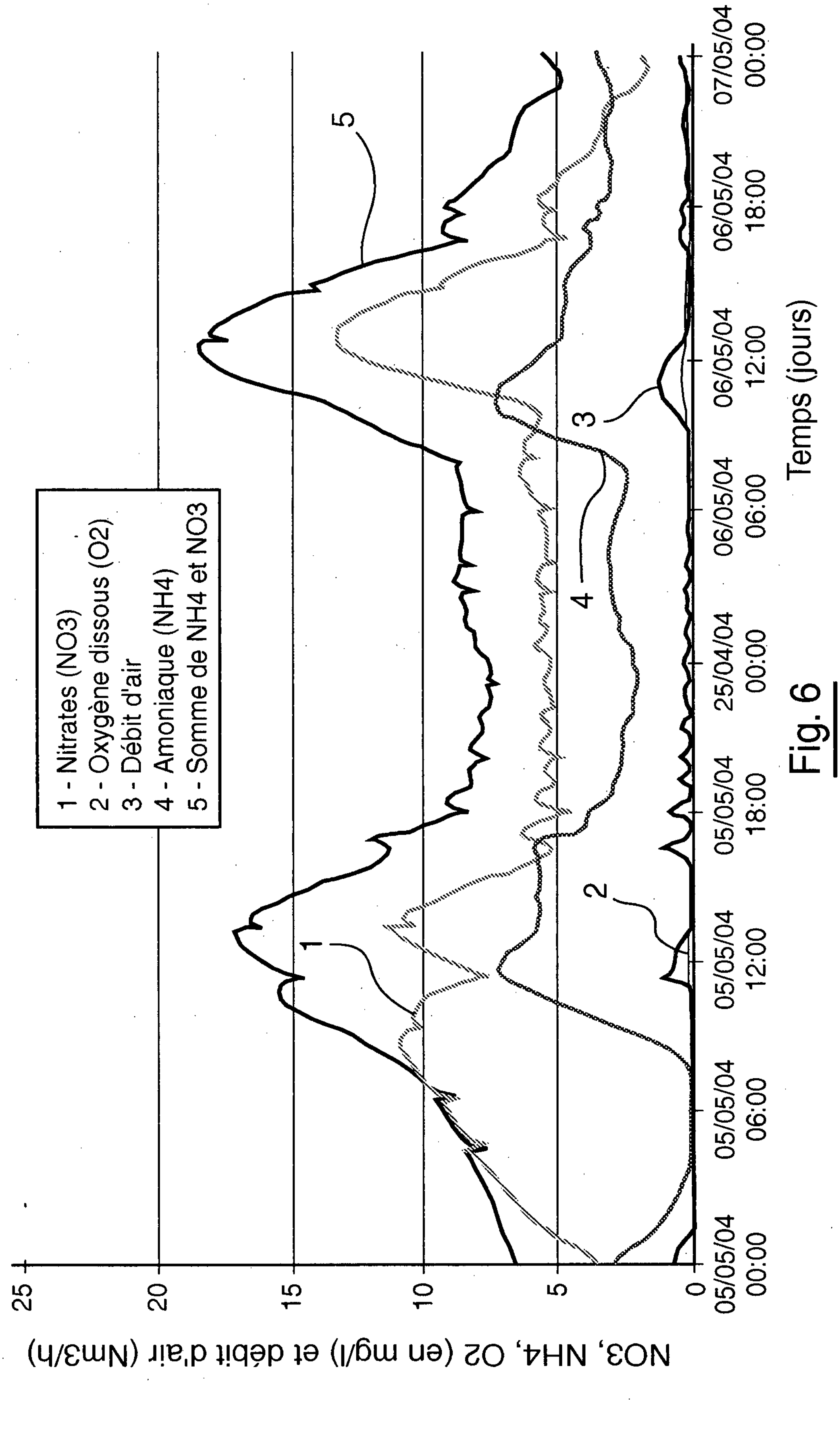
1 - Nitrates (NO3)
2 - Oxygène dissous (O2)
3 - Débit d'air
4 - Amoniaque (NH4)
5 - Somme de NH4 et NO3
NO3, NH4, O2 (en mg/l) et débit d'air (Nm3/h)
0
5
10
15
20
25
05/05/04 00:00
05/05/04 06:00
05/05/04 12:00
05/05/04 18:00
25/04/04 00:00
06/05/04 06:00
06/05/04 12:00
06/05/04 18:00
07/05/04 00:00
Temps (jours)
1
2
3
4
5

Fig. 6

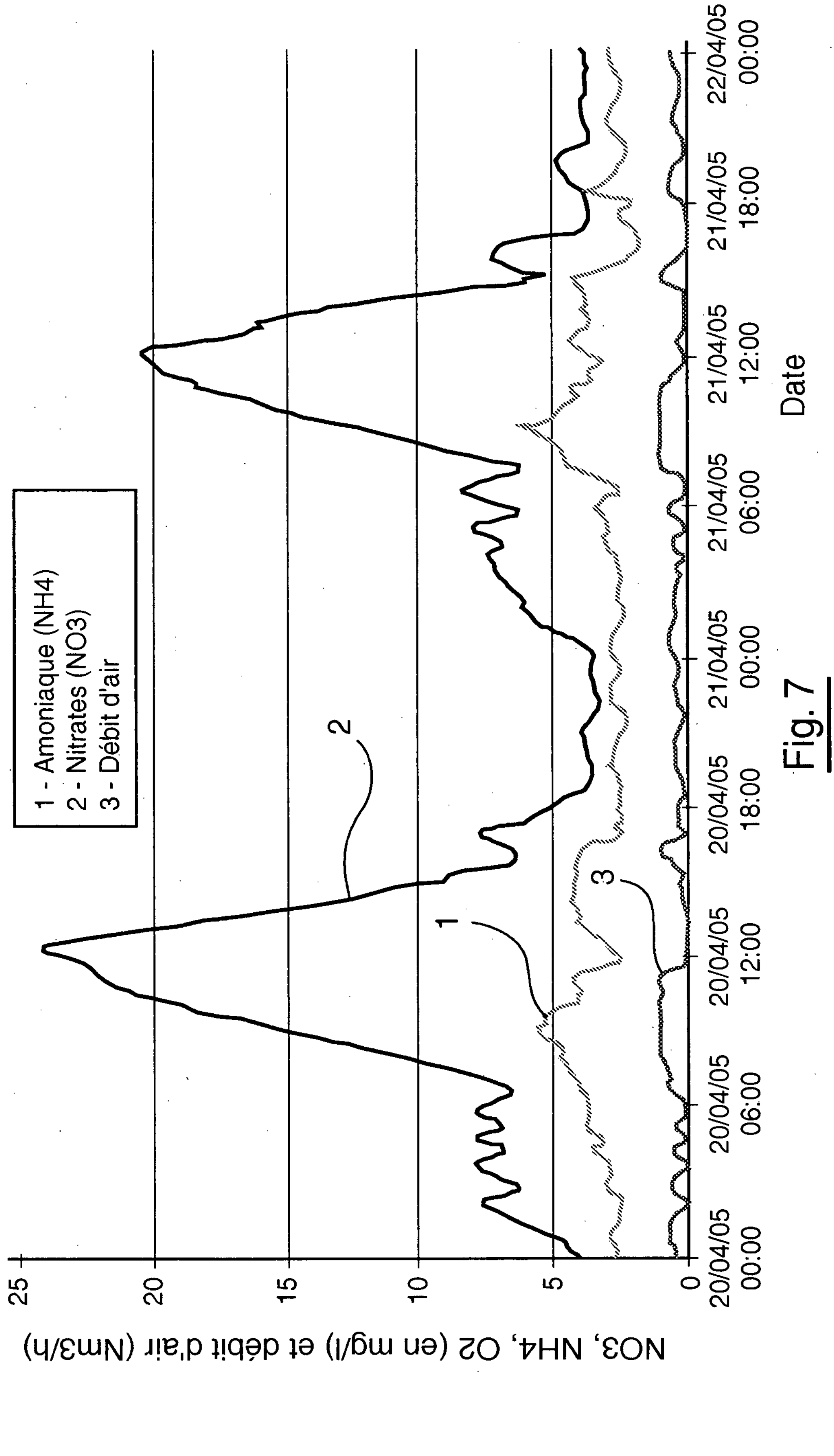
1 - Amoniaque (NH4)
2 - Nitrates (NO3)
3 - Débit d'air
NO3, NH4, O2 (en mg/l) et débit d'air (Nm3/h)
0
5
10
15
20
25
20/04/05 00:00
20/04/05 06:00
20/04/05 12:00
20/04/05 18:00
21/04/05 00:00
21/04/05 06:00
21/04/05 12:00
21/04/05 18:00
22/04/05 00:00
Date
1
2
3

Fig. 7

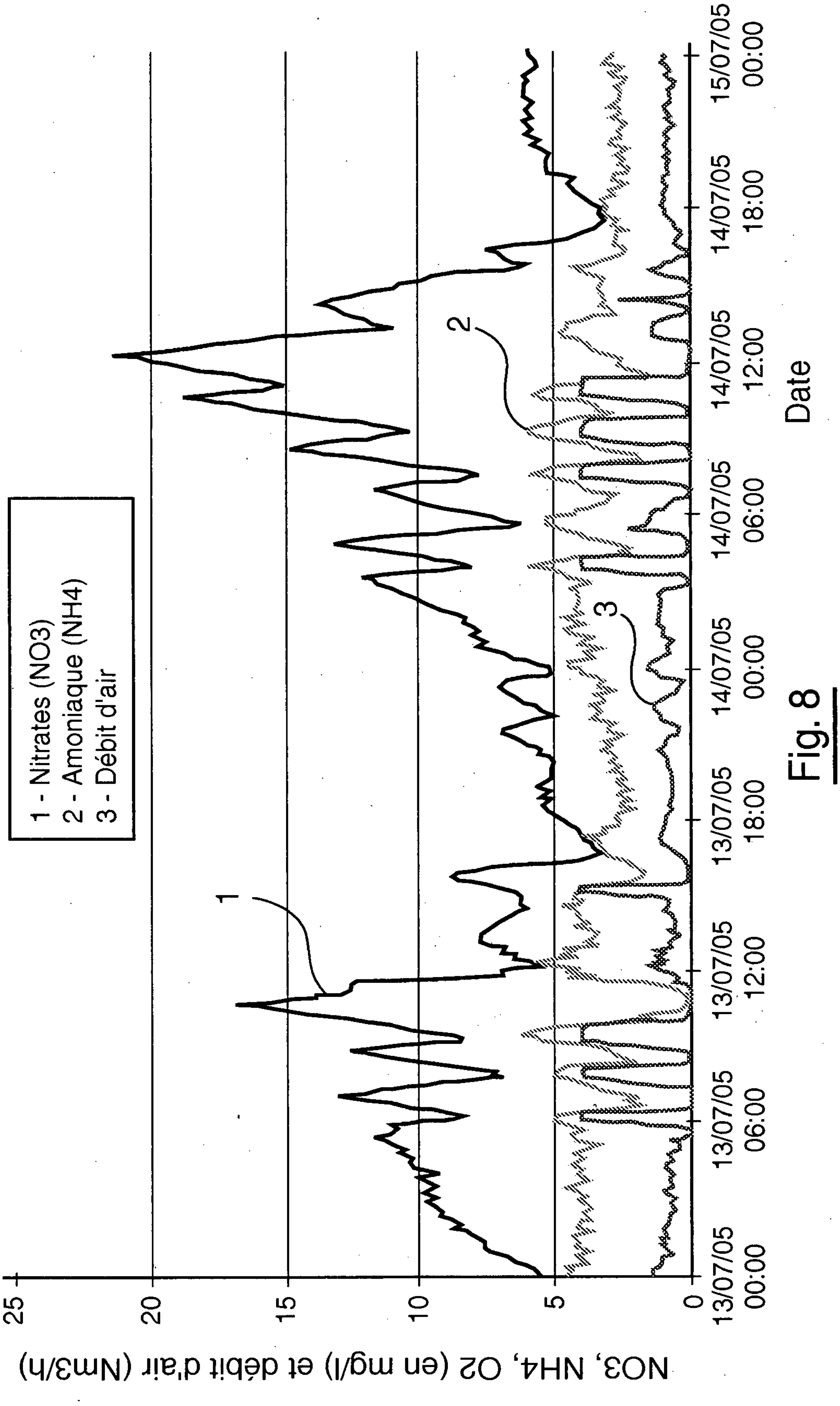
1 - Nitrates (NO3)
2 - Amoniaque (NH4)
3 - Débit d'air
1
2
3
NO3, NH4, O2 (en mg/l) et débit d'air (Nm3/h)
25
20
15
10
5
0
13/07/05 00:00
13/07/05 06:00
13/07/05 12:00
13/07/05 18:00
14/07/05 00:00
14/07/05 06:00
14/07/05 12:00
14/07/05 18:00
15/07/05 00:00
Date

Fig. 8

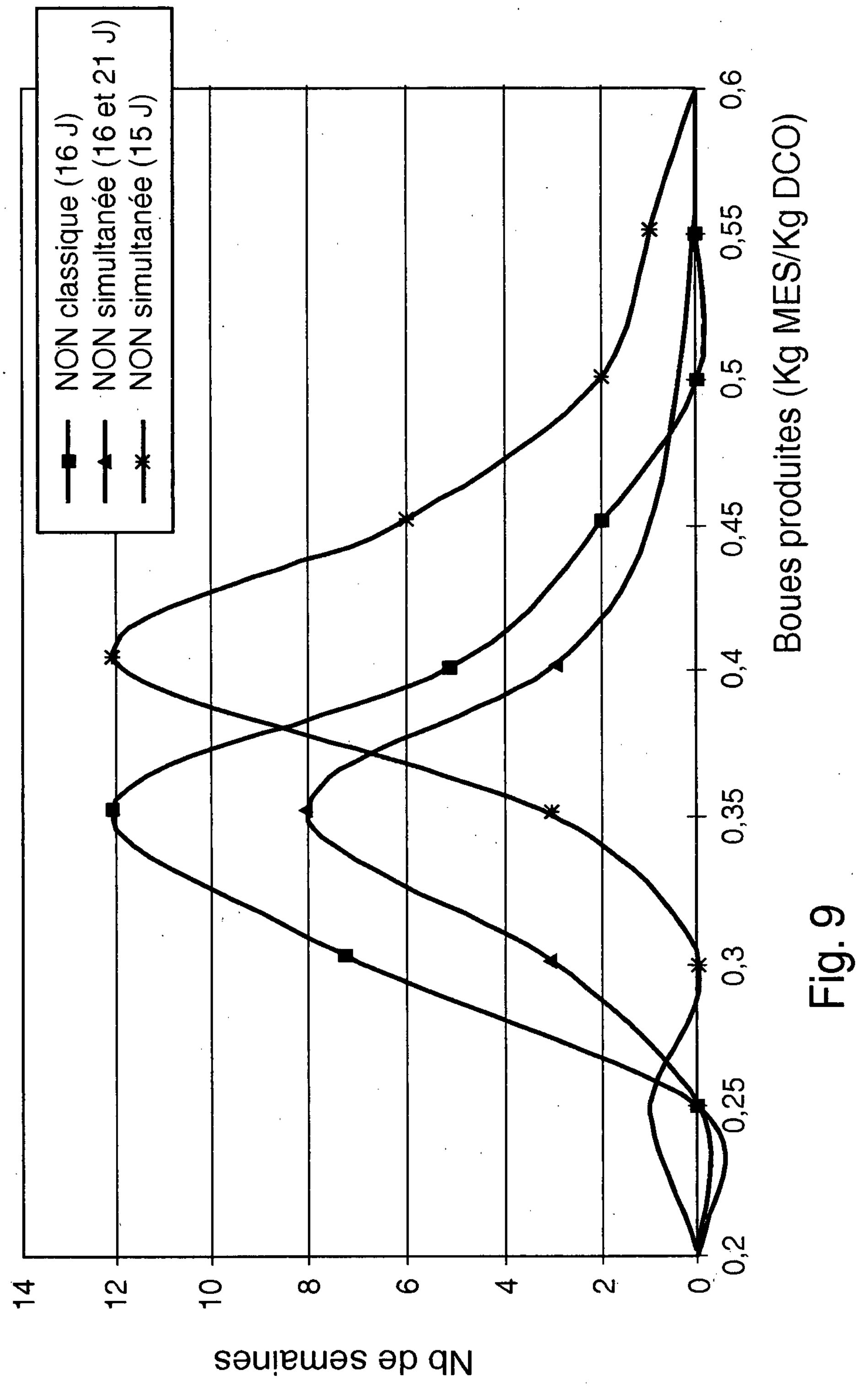
NON classique (16 J)
NON simultanée (16 et 21 J)
NON simultanée (15 J)
Nb de semaines
0
2
4
6
8
10
12
14
0,2
0,25
0,3
0,35
0,4
0,45
0,5
0,55
0,6
Boues produites (Kg MES/Kg DCO)

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0102306 A1
- FR 2764817
- WO 9307089 A
- WO 2006000680 A


### Littérature non-brevet citée dans la description


- **J. RICHALET ; J. RICHALET.** Pratique de la commande prédictive. 1993